(19) Europäisches Patentamt
European Patent Office
Office européen des brevets

(11) EP 1 921 511 B1

(12) EUROPEAN PATENT SPECIFICATION

(45) Date of publication and mention
of the grant of the patent:
**19.03.2014 Bulletin 2014/12**

(51) Int Cl.:
*G03G 15/08* (2006.01)   *C08K 5/098* (2006.01)
*C08J 9/00* (2006.01)   *H01B 1/20* (2006.01)
*H01B 1/24* (2006.01)   *C08J 9/06* (2006.01)

(21) Application number: **07021292.3**

(22) Date of filing: **31.10.2007**

(54) **Toner supply roller**

Tonerzuführrolle

Rouleau de fourniture de toner

(84) Designated Contracting States:
**DE FR GB**

(30) Priority: **10.11.2006 JP 2006305540**

(43) Date of publication of application:
**14.05.2008 Bulletin 2008/20**

(73) Proprietor: **SUMITOMO RUBBER INDUSTRIES, LTD.**
**Hyogo-ken (JP)**

(72) Inventors:
• **Mizumoto, Yoshihisa**
**Kobe-shi**
**Hyogo (JP)**

• **Sugimoto, Mutsuki**
**Kobe-shi**
**Hyogo (JP)**

(74) Representative: **Manitz, Finsterwald & Partner GbR**
**Postfach 31 02 20**
**80102 München (DE)**

(56) References cited:
**EP-A- 0 688 023   EP-A- 1 172 402**

**Description**

Field of the Invention

The present invention relates to a toner supply roller of an image-forming apparatus, having a spongy foamed elastic layer, which is used for supplying a developer to the surface of a toner-carrying member of a developing mechanism of an image-forming apparatus such as a copying apparatus, a facsimile, a printer.

In the image-forming apparatus, various conductive rollers are used in the developing mechanism for attaching toner to an electrostatic latent image formed by exposing an image to a photoreceptor drum uniformly charged.

The toner supply roller which is one of the conductive rollers for use in the developing mechanism plays the role of supplying toner particles accommodated in a toner box to a developing roller. The toner supply roller is required to have a low hardness so that the toner supply roller does not destroy the toner particles sandwiched between the toner supply roller and the developing roller when the toner supply roller supplies the toner particles to the developing roller. The toner supply roller is also required to have comparatively large cells because the toner supply roller is required to deliver a sufficiently large amount of toner particles in one-time delivery. If the sizes of the cells are not uniform, there is a variation in the delivery amount of the toner. Thereby a defective image is formed. Therefore the sizes of the cells are required to be uniform. Further the toner supply roller is required to maintain its initial characteristic for a long time without being unchanged in its quality owing to wear.

As the toner supply roller, a roller composed of urethane foam excellent in its wear resistance is conventionally used.

But the urethane foam is expensive. In addition, to form the urethane foam into a high-quality product, it is necessary to harden a liquid polymer by heating it in batch processing. Therefore it is impossible to produce the roller at a low cost, even though a processing method is thought out.

In addition there is a variation in the size of cells by the time the urethane foam hardens. Consequently there is a variation in the supply amount of toner, which causes the generation of a defective image.

Further there is a possibility that a transfer substance, particularly a conductivity-imparting agent used to adjust the electric resistance value of urethane bleeds, thus contaminating a photoreceptor through the developing roller. There is no problem in the use of a two-component toner containing a carrier, because the developing roller and the photoreceptor do not contact each other. But in a developing mechanism in which a one-component toner is used, the developing roller and the photoreceptor contact each other. In this case, there is a high possibility that the photoreceptor is contaminated.

To solve the potential problems of the urethane foam, an unpolluting toner supply roller is proposed and disclosed in Japanese Patent Application Laid-Open No. 2004-45656 (patent document 1). The toner supply roller has a low hardness, has little variation in the size of cells, and can be adjusted in its electric resistance value without using a conductivity-imparting agent.

In the invention described in the patent document 1, predetermined rubber is formed into sponge having a high foaming magnification of 7 to 20 and a cell-diameter distribution of 300 to 500μm by using a chemical foaming agent. Because the cells are formed by adding the chemical foaming agent to the rubber, the cells are formed in a uniform size. Further because the vulcanizing rubber is used, it is possible to decrease the material and production costs and hence supply the toner supply roller at a low cost.

But the rubber of the toner supply roller is foamed at a high foaming magnification. Thus there is room for improvement in terms of the wear resistance thereof.

Patent Document 1

Japanese Patent Application Laid-Open No. 2004-45656

European patent application 1 172 402 A1 discloses a foamable rubber composition comprising a nitrile group-containing highly saturated copolymer rubber, such as HNBR, polyethylene, a metal salt of an ethylenically unsaturated carboxylic acid, an organic peroxide and a foaming agent. This rubber composition may be used as industrial roll material.

SUMMARY OF THE INVENTION

The present invention has been made in view of the above-described problems. Therefore it is an object of the present invention to provide a foamed rubber roller which has a foamed elastic layer having a high wear resistance and cells having a uniform diameter and which can be produced at a low cost and yet produced at a high productivity.

To solve the above-described problems, the present invention provides a toner supply roller of an image-forming apparatus comprising a foamed elastic layer forming an outer layer thereof;

- wherein said foamed elastic layer is composed of a thermosetting elastomer composition containing 100 parts by mass of a rubber component (1) and 5 to 60 parts by mass of zinc methacrylate (2a) or 5 to 60 parts by mass of a mixture (2a) of methacrylic acid and zinc oxide as a filler (2); said thermosetting elastomer composition being foamed with a combination of a chemical foaming agent and a chemical foaming assistant agent,

- wherein said rubber component (1) contains acrylonitrile-butadiene rubber or/and hydrogenated acrylonitrile-butadiene rubber,
- wherein said rubber component (1) further comprises as an ionic-conductive rubber a polyether copolymer consisting of an ethylene oxide (EO)-propylene oxide (PO)-allyl glycidyl ether (AGE) terpolymer or said filler (2) further comprises as a conductive material an electroconductive material consisting of conductive carbon black; and said toner supply roller of an image-forming apparatus has an electric resistance of $10^3$ to $10^{10}$ Ω, and
- wherein the foaming magnification of said foamed elastic layer is set to not less than seven nor more than 20 and the cell-diameter distribution thereof is set to not less than 100 μm nor more than 700 μm,
- wherein said electric resistance of said toner supply roller of an image-forming apparatus is measured as described in the description in the section "•Electric Resistance of Roller",
- wherein said foaming magnification of said foamed elastic layer is measured by determining the bulk specific gravity from the volume of the foamed elastic layer of said toner supply roller of an image-forming apparatus and its mass, by measuring the specific gravity of the thermosetting elastomer composition before it is vulcanized and foamed and by dividing the bulk specific gravity by the specific gravity of said thermosetting elastomer composition, and
- wherein said cell-diameter distribution of said foamed elastic layer is measured by taking photographs of foamed cells at a magnification of 100 on the circular surface of each toner supply roller at two points spaced by 15 mm from both ends thereof, at the center point in its longitudinal direction, and at a point disposed radially inward by 5 mm from each of these three points, by photographing the foamed cells at six points (3X2), by binarizing images of the photographs by an image-processing software, by performing computations in all the photographs and by computing the average of the obtained values.

To solve the above-described problems, the present inventors have made energetic close examinations and completed the present invention, based on the finding described below.

More specifically, by adding the zinc methacrylate (2a) or the mixture (2a) of the methacrylic acid and the zinc oxide as the filler (2) to the rubber component at a specific ratio, it is possible to obtain the thermosetting elastomer composition excellent in its wear resistance. Further by using rubber other than urethane rubber as the rubber component (1) of the thermosetting elastomer composition, it is possible to secure a high productivity at a low cost and in addition form cells having a uniform diameter without being inhibited by the filler (2a). It is especially favorable to use rubber which displays rubber elasticity by being crosslinked with a crosslinking agent.

The thermosetting elastomer composition to be used in the present invention is described in detail below.

The thermosetting elastomer composition contains 100 parts by mass of the rubber component (1) and 5 to 60 parts by mass of the zinc methacrylate (2a) or 5 to 60 parts by mass of the mixture (2a) of the methacrylic acid and the zinc oxide as the filler (2).

By using the above-described thermosetting elastomer composition containing the zinc methacrylate therein, the zinc methacrylate functioning as a co-crosslinking agent makes a graft polymerization reaction at a crosslinking time to form a fine structure. The resulting thermosetting elastomer composition has a higher mechanical property and a higher wear resistance than conventional thermosetting elastomer compositions reinforced with carbon black.

When the mixture of the methacrylic acid and the zinc oxide is mixed with the rubber component instead of mixing the zinc methacrylate therewith, the zinc methacrylate formed in the elastomer composition can be functioned as the co-crosslinking agent. In mixing the mixture of the methacrylic acid and the zinc oxide with the rubber component, it is preferable to set the mixing ratio between the methacrylic acid and the zinc oxide to 2:1. But the methacrylic acid does not react with all of the zinc oxide. Thus it is normal to set the mixing ratio between the methacrylic acid and the zinc oxide to 1 to 2:1.

The reason why five to 60 parts by mass of the zinc methacrylate (2a) or the mixture (2a) of the methacrylic acid and the zinc oxide are mixed with 100 parts by mass of the rubber component is as follows: If less than five parts by mass of the zinc methacrylate (2a) or the mixture (2a) of the methacrylic acid and the zinc oxide is mixed with 100 parts by mass of the rubber component, the co-crosslinking effect of the zinc methacrylate (2a) is not displayed. Thus there is a fear that the resulting thermosetting elastomer composition has an inferior mechanical property and an excessive wear. Unless a sufficient wear resistance effect is obtained, there is a fear that a defective image is formed when the foamed rubber roller of the present invention is used as a toner supply roller. On the other hand, if more than 60 parts by mass of the zinc methacrylate (2a) or the mixture (2a) of the methacrylic acid and the zinc oxide is mixed with 100 parts by mass of the rubber component, i.e., when an excessive amount of the zinc methacrylate (2a) or the mixture (2a) of the methacrylic acid and the zinc oxide is mixed therewith, there is a fear that the components of the thermosetting elastomer composition cannot be kneaded by a rubber kneading apparatus. The foamed rubber roller of the present invention is used as a toner supply roller, the hardness of the toner supply roller is so high that cells are acceleratedly clogged with toner. Thus there is a fear that a defective image is formed.

Five parts by mass to 50 parts by mass of the zinc methacrylate (2a) or the mixture (2a) of the methacrylic acid and the zinc oxide is mixed with 100 parts by mass of the rubber component.

Zinc methacrylate (2a) or the mixture (2a) of the methacrylic acid and the zinc oxide is added to the rubber component (1) as the filler (2).

It is possible to use a rubber component in which the zinc methacrylate is dispersed in advance. In this case, because the zinc methacrylate is contained in the rubber component (1) in advance, it is unnecessary to add the zinc methacrylate (2a) or the mixture (2a) of the methacrylic acid and the zinc oxide to the rubber component (1) again as the filler (2).

As a base polymer in which the zinc methacrylate is dispersed, any of rubber components according to claim 1 can be used. But it is more favorable to use hydrogenated acrylonitrile-butadiene rubber (hereinafter referred to as HNBR).

That is, a preferable example of the thermosetting elastomer composition of the present invention contains a rubber component (1a) consisting of the HNBR in which the zinc methacrylate is dispersed.

It is preferable to use other rubber in combination with the rubber consisting of the HNBR in which the zinc methacrylate is dispersed. As the other rubber, any of the rubbers listed below can be used. However, according to the present invention, the rubber component (1) contains acrylonitrile-butadiene rubber (hereinafter referred to as NBR) or/and the HNBR.

When the rubber component in which the zinc methacrylate is dispersed in advance is used, for the reason described above, the mixing amount of the zinc methacrylate to be dispersed in the rubber component and the mixing ratio between the rubber consisting of the HNBR in which the zinc methacrylate is dispersed and the other rubber should be so determined that the mixing amount of the zinc methacrylate is 5 to 60 parts by mass and favorably 5 to 50 parts by mass for 100 parts by mass of the entire rubber component.

The rubber consisting of 100 parts by mass of the HNBR in which 91 to 115 parts by mass of the zinc methacrylate is dispersed is used at 9.3 to 126 parts by mass, favorably at 10 to 120 parts by mass, and more favorably 10 to 70 parts by mass, and most favorably at 30 to 60 for 100 parts by mass of the entire rubber component.

To obtain the rubber component in which the zinc methacrylate is dispersed, the zinc methacrylate may be mixed with the rubber component, i.e. the HNBR to finely disperse the zinc methacrylate therein. Alternatively it is possible to mix the methacrylic acid and the zinc oxide with the rubber component, i.e. the HNBR so that the zinc methacrylate formed by the mixing is finely disperse in the rubber component. It is also possible to use a commercially available product in which the zinc methacrylate is mixed with the rubber component, i.e. the HNBR and finely dispersed therein.

The thermosetting elastomer composition of the present invention contains the rubber component (1), the zinc methacrylate (2a) or the mixture (2a) of the methacrylic acid and the zinc oxide as the filler (2), and the combination of the chemical foaming agent and the chemical foaming assistant agent for foaming the thermosetting elastomer composition so that the thermosetting elastomer composition is spongy.

In the present specification, the chemical foaming agent and the chemical foaming assistant agent added to the rubber component (1) as desired are generically named as a "additive (4) for foaming use".

It is preferable that the thermosetting elastomer composition of the present invention contains one or more kinds of crosslinking agents (3) selected from the group consisting of sulfur, an organic sulfur-containing compound, an organic peroxide, a heat-resistant crosslinking agent, and a resin crosslinking agent.

It is preferable that the thermosetting elastomer composition of the present invention contains one or more kinds of the filler selected from the group consisting of a co-crosslinking agent other than the zinc methacrylate and the mixture of the methacrylic acid and the zinc oxide, a vulcanization accelerator, a vulcanization-accelerating assistant agent other than the zinc oxide, a conductive material, an acid-accepting agent, an age resistor, a softener for rubber, a reinforcing agent, and other kinds of additives as the filler(2)(these fillers are generically named as filler (2b)).

The mixing amount of the filler (2) is set to 5 to 80 parts by mass for 100 parts by mass of the rubber component (1). If the mixing amount of the filler (2) is more than 80 parts by mass, the hardness of the thermosetting elastomer composition is so high that there is a fear the foamed rubber roller of the present invention may damage other members such as a photoreceptor. The mixing amount of the filler (2b) other than the zinc methacrylate (2a) or the mixture (2a) of the methacrylic acid and the zinc oxide is set to the range of 0.1 to 30 parts by mass for 100 parts by mass of the rubber component (1). If the mixing amount of the filler (2b) is less than 0.1 parts by mass, it is difficult for the filler (2b) to provide the thermosetting elastomer composition with a reinforcing effect nor improve the mechanical property thereof. On the other hand, if the mixing amount of the filler (2b) is more than 30 parts by mass, the filler (2b) is incapable of providing the thermosetting elastomer composition with a high elastic function in its mechanical property owing to an excessive reinforcing effect, i.e., the thermosetting elastomer composition has a high hardness and a low tensile elongation.

It is preferable to set the mixing amount of the vulcanizing agent (3) to 0.1 to 30 parts by mass for 100 parts by mass of the rubber component (1) for the following reason: If the mixing amount of the crosslinking agent (3) is less than 0.1 parts by mass, the vulcanizing density becomes small and there is a fear that the thermosetting elastomer composition is not provided with a desired property. On the other hand, if the mixing amount of the vulcanizing agent (3) is more than 30 parts by mass, owing to an excessive crosslinking reaction, the hardness of the thermosetting elastomer composition is so high that there is a fear the foamed rubber roller of the present invention may damage other members such as the photoreceptor.

It is preferable to add 2 to 20 parts by mass of the additive (4) for foaming use to 100 parts by mass of the rubber component (1).

More specifically, the mixing amount of the chemical foaming agent is set to favorably 3 to 15 parts by mass and more favorably to 4 to 10 parts by mass for 100 parts by mass of the rubber component (1). The mixing amount of the chemical foaming assistant agent is set to favorably 0.1 to 5 parts by mass and more favorably to 1 to 4 parts by mass for 100 parts by mass of the rubber component (1).

By adjusting the mixing amount between the chemical foaming agent and the chemical foaming assistant agent to 10:1 to 2:1, a foam having a cell-diameter distribution in the range of not less than $300\mu m$ nor more than $500\mu m$ can be easily obtained.

According to the present invention, the toner supply roller of the present invention composed of the thermosetting elastomer composition has properties described below.

The electric resistance of the toner supply roller of the present invention is $10^3$ to $10^{10}\,\Omega$. If the electric resistance of the toner supply roller is less than $10^3\,\Omega$, the toner supply roller has a high conductivity. Thus it is a little difficult to charge toner. Toner charged to a high extent deteriorates in its chargeability when it is used for a long time. Therefore it is necessary to select the electric resistance of the toner supply roller in accordance with an image-forming apparatus where the toner supply roller is mounted and the toner used therefor. On the other hand, if the electric resistance of the toner supply roller is more than $10^{10}\,\Omega$, the toner supply roller is charged. Thereby it is difficult to easily separate toner from the surface thereof and reliably form an image.

It is more favorable that the electric resistance of the toner supply roller of the present invention is $10^5$ to $10^{10}\,\Omega$.

The electric resistance of the toner supply roller of the present invention can be adjusted because the thermosetting elastomer composition thereof contains an ionic-conductive rubber as the rubber component (1) or/and contains a conductive material as the filler (2).

To allow the toner supply roller to have an equal electric resistance inside it and all produced toner supply rollers to have the equal electric resistance, it is preferable that the rubber component (1) is ionic-conductive. It is preferable that the rubber component (1) comprises the ionic-conductive rubber to prevent the generation of bleed so that other members such as the photoreceptor can be prevented from being contaminated.

The hardness of the toner supply roller of the present invention is set to favorably 10 to 90 and more favorably 30 to 70 in F hardness. The F hardness is measured by using an Asker F-type hardness meter suitable for measuring the hardness of a low-hardness member.

More specifically, to measure the hardness of the toner supply roller, at a temperature of 23°C and a relative humidity of 55%, a load of 500g is applied to both ends of the shaft thereof with the Asker F-type hardness meter vertically fixed to the center of the toner supply roller. A value indicated five seconds later by the Asker F-type hardness meter is read.

According to the present invention, the foaming magnification of the foamed elastic layer of the toner supply roller of the present invention is set to not less than seven nor more than 20 and that the cell-diameter distribution thereof is set to not less than $100\mu m$ nor more than $700\mu m$.

If the foaming magnification of the toner supply roller is less than seven, the hardness thereof is so high that the nip is small. Thereby there is a case in which it is difficult for the toner supply roller to supply toner to a developing roller. On the other hand, if the foaming magnification of the toner supply roller is more than 20, the hardness thereof is so low that the cell is too large. Thereby there is a case in which an excessive amount of toner is supplied to the developing roller, which may cause the generation of a defective image. The foaming magnification is set to more favorably 8 to 15.

The toner supply roller of the present invention has an excellent wear resistance and a high durability. Thus even though the cell diameter is about $100\mu m$, clogging hardly occurs because the toner supply roller has a high wear resistance. Even though the cell diameter is as large as about $700\mu m$, a phenomenon that the outer wall of cells wears and collapses does not occur. Therefore a comparatively large cell diameter is permitted in the present invention. It is more favorable that the cell-diameter distribution is set to not less than $300\mu m$ nor more than $500\mu m$. If the cell diameter is less than $300\mu m$, a small amount of toner is supplied to the developing roller. If the cell diameter is more than $500\mu m$, an excessively large amount of toner is supplied to the developing roller. In both cases, defective images are formed. It is most favorable that the cell-diameter distribution is set to not less than $350\mu m$ nor more than $500\mu m$.

Each of the components contained in the thermosetting elastomer composition is described in detail below.

According to the present invention, the rubber component (1) contains NBR and/or HNBR.

As the rubber component (1), known rubber can be used so long as the use thereof is not contradictory to the object of the present invention. More specifically, it is possible to use NBR, NBR in which carbonyl group is introduced, HNBR, natural rubber, butadiene rubber, styrene-butadiene rubber, isoprene rubber, butyl rubber, chloroprene rubber, acrylic rubber, epichlorohydrin copolymer, and polyether copolymer.

As the rubber component (1), one kind of rubber or more kinds of rubbers may be used by mixing them with each other.

In using two kinds of rubbers by mixing them with each other, supposing that the total mass of the rubber component is 100 parts by mass, the mixing amount of one ("rubber A") of the two kinds of the rubbers is set to 90 to 50 parts by mass and favorably 90 to 70 parts by mass, whereas the mixing amount of the other ("rubber B") of the two kinds of the rubbers is set to 10 to 50 parts by mass and favorably 10 to 30 parts by mass.

The mixing amount of the rubber A is set to not less than 50 nor more than 90 parts by mass for the following reason: If the mixing amount of the rubber A is less than 50 parts by mass, the rubber component has a low physical strength. On the other hand, if the mixing amount of the rubber A is more than 90 parts by mass, there is a fear that the performance of the rubber B is not displayed.

The mixing amount of the rubber B is set to not less than 10 nor more than 50 parts by mass for the following reason: If the mixing amount of the rubber B is less than 10 parts by mass, there is a fear that the performance of the rubber B is not displayed. On the other hand, if the mixing amount of the rubber B is more than 50 parts by mass, the rubber component has a low physical strength, based on the rubber A.

The rubber component (1) contains NBR or/and HNBR.

The copolymer rubber containing the nitrile groups is obtained by copolymerizing $\alpha,\beta$-ethylene unsaturated nitrile monomer with other monomers. As the $\alpha,\beta$-ethylene unsaturated nitrile monomer, acrylonitrile, methacrylonitrile, $\alpha$-chloroacrylonitrile, are listed. The acrylonitrile is favorable. The content of the $\alpha,\beta$-ethylene unsaturated nitrile monomeric unit is set to 10 to 60 mass %, favorably 12 to 55 mass %, and more favorably 15 to 50 mass %.

As monomers to be copolymerized with the $\alpha,\beta$-ethylene unsaturated nitrile monomer, a conjugated diene monomer, an unconjugated diene monomer, and an $\alpha$-olefin are listed. Of these monomers, the conjugated diene monomer is preferable. It is possible to use these monomers in combination with an aromatic vinyl monomer, a fluorine-containing vinyl monomer, $\alpha,\beta$-ethylene unsaturated monocarboxylic acid, $\alpha,\beta$-ethylene unsaturated multivalent carboxylic acid, and anhydrides thereof.

As the conjugate monomers, 1,3-butadiene, isoprene, 2,3-dimethyl-1,3-butadiene, and 1,3-pentadiene are listed. The 1,3-butadiene is preferable.

The copolymer rubber containing the nitrile groups includes hydrogenated rubber obtained by hydrogenating carbon-carbon unsaturated bonds of the copolymer rubber containing the nitrile groups by using a known method. It is preferable to use the hydrogenated rubber having residual double bonds of not more than 30%, especially not more than 10%.

The copolymer rubber containing the nitrile groups also includes rubbers formed by introducing carbonyl groups into the copolymer rubber containing the nitrile groups and rubbers formed by introducing the carbonyl groups into hydrogenated rubbers thereof.

As examples of the copolymer rubber containing the nitrile groups, it is possible to list NBR, acrylonitrile-isoprene rubber, acrylonitrile-butadiene-acrylate rubber, acrylonitrile-butadiene-acrylate-methacrylate rubber, hydrogenated rubber of these rubber, and rubbers formed by introducing the carbonyl groups into these rubbers.

According to the present invention, the rubber component (1) contains the NBR or/and the HNBR. It is most favorable to use the HNBR having residual double bonds of not more than 10%. The NBR and the HNBR have a high tensile strength, tear strength, and resistance to fracture respectively.

As the NBR or the NBR which is used as the material of the HNBR, it is possible to use any of low-nitrile NBR having the bound acrylonitrile amount of not more than 25%, intermediate-nitrile NBR having the bound acrylonitrile amount of 25% to 31%, moderate high-nitrile NBR having the bound acrylonitrile amount of 31% to 36%, and high-nitrile NBR having the bound acrylonitrile amount of not less than 36%.

It is more favorable to use the moderate high-nitrile NBR having the bound acrylonitrile amount of 31% to 35% and the high-nitrile NBR having the bound acrylonitrile amount of 36 to 50%.

It is more favorable to use the HNBR having the bound acrylonitrile amount of 21% to 46% and a Mooney viscosity ML1+4(100°C) of 20 to 160. The reason the bound acrylonitrile amount of the HNBR is set to 21% to 46% is as follows: If the bound acrylonitrile amount of the HNBR is less than 21%, the resulting thermosetting elastomer composition has an inferior mechanical property. On the other hand, if the bound acrylonitrile amount of the HNBR is more than 46%, the resulting thermosetting elastomer composition has a high glass transition temperature Tg. The bound acrylonitrile amount of the HNBR is favorably in the range of 21% to 44% and more favorably in the range of 31% to 35%. If the Mooney viscosity ML1+4(100°C) of the HNBR is less than 20, the resulting thermosetting elastomer composition has a low molecular weight and a low wear resistance. On the other hand, if the Mooney viscosity ML1+4(100°C) is more than 160, the resulting thermosetting elastomer composition has an excessive molecular weight distribution. Thereby it is difficult to perform kneading and molding operations. The Mooney viscosity ML1+4(100°C) of the HNBR is more favorably in the range of 40 to 150. The Mooney viscosity is measured in accordance with JIS K 6300.

It is preferable that the toner supply roller of the present invention contains the ionic-conductive rubber to adjust the electric resistance thereof to the above-described predetermined range.

The ionic-conductive rubber includes a copolymer containing ethylene oxide. As the copolymer containing the ethylene oxide, polyether copolymers and epichlorohydrin copolymers are listed.

As the epichlorohydrin copolymers, it is possible to use epichlorohydrin homopolymer, an epichlorohydrin-ethylene oxide copolymer, an epichlorohydrin-propylene oxide copolymer, an epichlorohydrin-allyl glycidyl ether copolymer, an epichlorohydrin-ethylene oxide-allyl glycidyl ether copolymer, an epichlorohydrin-propylene oxide-allyl glycidyl ether copolymer, and an epichlorohydrin-ethylene oxide-propylene oxide-allyl glycidyl ether copolymer.

As the epichlorohydrin copolymer, a copolymer containing the ethylene oxide is preferable. The copolymer contains the ethylene oxide at not less than 30 mol% nor more than 95 mol%, favorably at not less than 55 mol% nor more than 95 mol%, and more favorably at not less than 60 mol% nor more than 80 mol%. The ethylene oxide has an action of decreasing the specific volume resistance value of the copolymer. When the ethylene oxide is contained in the copolymer at less than 30 mol%, the ethylene oxide decreases the specific volume resistance value of the polymer to a low degree. On the other hand, when the ethylene oxide is contained in the copolymer at more than 95 mol%, the ethylene oxide crystallizes and thus motions of segments of molecular chains thereof are prevented from taking place. Thereby the specific volume resistance value of the copolymer is liable to increase, the hardness of vulcanized rubber increases, and the viscosity of rubber increases before it is vulcanized.

As the epichlorohydrin copolymer, it is especially preferable to use an epichlorohydrin (EP)-ethylene oxide (EO)-allyl glycidyl ether (AGE) copolymer. As the content ratio among the EO, the EP, and the AGE in the epichlorohydrin copolymer, EO:EP:AGE is set to favorably 30 to 95 mol%:4.5 to 65 mol%:0.5 to 10 mol% and more favorably 60 to 80 mol%:15 to 40 mol%:2 to 6 mol%.

As the epichlorohydrin copolymer, it is also possible to use an epichlorohydrin (EP)-ethylene oxide (EO) copolymer. As the content ratio between the EO and the EP, EO:EP is set to favorably 30 to 80 mol%:20 to 70 mol% and more favorably 50 to 80 mol%:20 to 50 mol%.

As the polyether copolymers, it is possible to use an ethylene oxide-propylene oxide-allyl glycidyl ether copolymer, an ethylene oxide-allyl glycidyl ether copolymer, propylene oxide-allyl glycidyl ether copolymer, an ethylene oxide-propylene oxide copolymer, and urethane rubber.

It is favorable that the polyether copolymer contains the ethylene oxide. It is more favorable that the polyether copolymer contains the ethylene oxide at 50 to 95 mol%. When the polyether copolymer contains the ethylene oxide at a high percentage, it is possible to stabilize many ions and thus allows the thermosetting elastomer composition to have a low electric resistance. But when the polyether copolymer contains the ethylene oxide at a very high percentage, the ethylene oxide crystallizes and the motions of the segments of the molecular chains thereof are prevented from taking place. Consequently there is a possibility that the specific volume resistance value of the copolymer increases.

It is preferable that the polyether copolymer contains the allyl glycidyl ether in addition to the ethylene oxide. By copolymerizing the allyl glycidyl ether with the ethylene oxide, the allyl glycidyl ether unit obtains a free volume as a side chain. Thus the crystallization of the ethylene oxide is suppressed. As a result, the foamed rubber roller has a lower electric resistance than conventional rubber rollers. By copolymerizing the allyl glycidyl ether with the ethylene oxide, carbon-to-carbon double bonds are introduced into the polyether copolymer. Thus it is possible to crosslink it with other kind of rubber and thereby prevent occurrence of bleeding and other member such as an photoreceptor from being contaminated.

It is preferable that the polyether copolymer contains 1 to 10 mol% of the allyl glycidyl ether. When the polyether copolymer contains less than one mol% of the allyl glycidyl ether, bleeding and contamination of the other member such as photoreceptor are liable to occur. On the other hand, when the polyether copolymer contains more than 10 mol% of the allyl glycidyl ether, it is impossible to obtain the effect of suppressing crystallization to a higher extent, and the number of crosslinked points increases after vulcanization. Thus it is impossible to allow the foamed rubber roller to have a low electric resistance value. In addition, the tensile strength, fatigue characteristic, and flexing resistance of the foamed rubber roller deteriorate.

As the polyether copolymer to be used in the present invention, it is preferable to use an ethylene oxide (EO)-propylene oxide (PO)-allyl glycidyl ether (AGE) terpolymer. By copolymerizing the propylene oxide with the ethylene oxide and the allyl glycidyl ether, it is possible to suppress the crystallization of the ethylene oxide to a higher extent. A preferable content ratio among the ethylene oxide (EO), the propylene oxide (PO), and the allyl glycidyl ether (AGE) in the polyether copolymer is EO:PO:AGE = 50 to 95 mol%:1 to 49 mol%:1 to 10 mol%. To effectively prevent bleeding from occurring and the other member such as photoreceptor from being contaminated, it is preferable that the number-average molecular weight Mn of the ethylene oxide (EO)-propylene oxide (PO)-allyl glycidyl ether (AGE) terpolymer is not less than 10,000.

As the filler (2), it is possible to list a co-crosslinking agent, a vulcanization accelerator, a vulcanization-accelerating assistant agent, a conductive material, an acid-accepting agent, an age resistor, a softener for rubber, a reinforcing agent, and other kinds of additives.

The co-crosslinking agent crosslinks itself and reacts with rubber molecules to crosslink them, thus making the entire elastomer composition polymeric.

As the co-crosslinking agent, it is possible to use ethylene unsaturated monomers represented by methacrylate ester and metal salts of methacrylic acid or acrylic acid; polyfunctional polymers utilizing the functional group of 1,2-polybutadiene; and dioximes.

As the ethylene unsaturated monomer, the following substances are listed:

(a) Monocarboxylic acids such as acrylic acid, methacrylic acid, crotonic acid,
(b) Dicarboxylic acids such as maleic acid, fumaric acid, itaconic acid,
(c) Ester or anhydride of the above-described (a) and (b)
(d) Metal salts of the above-described (a) through (c)
(e) Aliphatic conjugated dienes such as 1,3-butadiene, isoprene, 2-chloro-1,3-butadiene,
(f) Aromatic vinyl compounds such as styrene, $\alpha$-methylstyrene, vinyltoluene, ethyl vinylbenzene, divinylbenzene, and the like
(g) Vinyl compounds having a heterocyclic ring such as triallyl isocyanurate, triallyl cyanurate, and vinylpyridine
(h) Vinyl cyanide compounds such as methacrylonitrile and $\alpha$-chloroacrylonitrile, acrolein, formylstyrol, vinyl methyl ketone, vinyl ethyl ketone, and vinyl butyl ketone.

As the "ester of the monocarboxylic acids" of the above-described (c), the following substances are listed:

alkyl esters of (metha)acrylic acid such as methyl (metha)acrylate, ethyl (metha)acrylate, n-propyl (metha)acrylate, i-propyl (metha)acrylate, n-butyl (metha)acrylate, i-butyl (metha)acrylate, n-pentyl (metha)acrylate, i-pentyl (metha) acrylate, n-hexyl (metha)acrylate, cyclohexyl (metha)acrylate, 2-ethylhexyl (metha)acrylate, octyl (metha)acrylate, i-nonyl (metha)acrylate, tert-butyl cyclohexyl (metha)acrylate, decyl (metha)acrylate, dodecyl (metha)acrylate, hydroxymethyl (metha)acrylate; hydroxyethyl (metha)acrylate;
amino alkyl esters of (metha)acrylic acid such as aminoethyl acrylate, dimethylaminoethyl acrylate, butylaminoethyl acrylate,
(metha)acrylate having an aromatic ring such as benzyl (metha)acrylate, benzoyl (metha)acrylate, allyl (metha) acrylate;
(metha)acrylate having an epoxy group such as glycidyl (metha)acrylate, methaglycidyl (metha)acrylate, epoxycyclohexyl (metha)acrylate;
(metha)acrylate having functional groups such as N-methylol(metha)acrylamide, $\gamma$-methacryloxypropyltrimethoxysilane; tetrahydrofurfuryl (metha)acrylate; and
(metha)acrylate having a polyfunctional group such as ethylene glycol di(metha)acrylate, trimethylolpropane tri (metha)acrylate, ethylene dimethacrylate (EDMA), polyethylene glycol dimethacrylate, isobutylene ethylene dimethacrylate.

As the "esters of dicarboxylic acids" of the above-described (c), half esters such as methyl maleate, methyl itaconate; diallyl phthalate, diallyl itaconate, are listed.

As the "anhydrides of the unsaturated carboxylic acids" of the above-described (c), anhydride of acrylic acid, anhydride of maleic acid, are listed.

As the "metal salts" of the above-described (d), sodium salts, aluminum salts, calcium salts, zinc salts, and magnesium salts of unsaturated carboxylic acids such as acrylic acid, methacrylic acid, maleic acid, and fumaric acid are listed.

As the ethylene unsaturated monomer that can be preferably used in the present invention, the following substances are listed:

methacrylic acid;
higher ester of methacrylic acid such as trimethylolpropane trimethacrylate (TMPT), ethylene dimethacrylate (EDMA), polyethylene glycol dimethacrylate, cyclohexyl methacrylate, allyl methacrylate, tetrahydrofurfuryl methacrylate, and isobutylene ethylene dimethacrylate;
metal salts of $\alpha$, $\beta$-unsaturated carboxylic acids such as zinc salts, sodium salts, magnesium salts, calcium salts, aluminum salts of acrylic acid, methacrylic acid, fumaric acid, maleic acid, and
triallyl isocyanurate, triallyl cyanurate, diallyl phthalate, diallyl itaconate, vinyl toluene, vinyl pyridine, and divinylbenzene.

The methacrylic acid and the metal salts of the $\alpha$, $\beta$-unsaturated carboxylic acids are favorable. The methacrylic acid, and zinc acrylate, and zinc methacrylate are more favorable.

As the polyfunctional polymers, those utilizing the functional group of 1,2-polybutadiene are listed. More specifically, Buton 150, Buton 100, polybutadiene R-15, Diene-35, Hystal-B2000, are listed.

As the above-described dioximes, p-quinonedioxime, p,p'-dibenzoyl quinonedioxime, N,N'-m-phenylenebismaleimide, are listed.

As the vulcanization accelerator, both inorganic accelerators and organic accelerators can be used.

As the inorganic accelerator, it is possible to use slaked lime, magnesium oxide, titanium oxide, and litharge (PbO).

As the organic accelerator, thiurams, thiazoles, thioureas, dithiocarbamates, guanidines, and sulfeneamides are listed.

As the thiurams, tetramethylthiuram monosulfide, tetramethylthiuram disulfide, tetraethylthiuram disulfide, tetrabutylthiuram disulfide, and dipentamethylenethiuram tetrasulfide are listed.

As the thiazoles, it is possible to list 2-mercaptobenzothiazole, dibenzothiazyl disulfide, N-cyclohexyl benzothiazole, and the like.

As the thioureas, N,N'-diethylthiourea, ethylenethiourea, and trimethylthiourea are listed.

As the dithiocarbamates, zinc dimethyl dithiocarbamate, zinc diethyl dithiocarbamate, zinc dibutyl dithiocarbamate, sodium dimethyl dithiocarbamate, sodium diethyl dithiocarbamate, copper dimethyl dithiocarbamate, ferric dimethyl dithiocarbamate (III), selenium diethyl dithiocarbamate, and tellurium diethyl dithiocarbamate are listed.

As the guanidine accelerator, it is possible to list di-o-tolyl guanidine, 1,3-diphenyl guanidine, 1-o-tolylbiguanide, and di-o-tolylbiguanide salts of dicatechol borate.

As the sulfenamides, it is possible to list N-cyclohexyl-2-benzothiazolylsulfenamide, N-oxydiethylene-2-benzothiazolylsulfenamide,

N-tert-butyl-2-benzothiazolylsulfenamide, and

N,N'-dicyclohexyl-2-benzothiazolylsulfenamide.

The mixing amount of the vulcanization accelerator should be large enough to allow the property of the rubber component to be sufficiently displayed. In the case of an inorganic vulcanization accelerator, the mixing amount thereof is selected in the range of 0.5 to 15 parts by mass with respect to 100 parts by mass of the rubber component. In the case of an organic vulcanization accelerator, the mixing amount thereof is selected in the range of 0.5 to 3 parts by mass with respect to 100 parts by mass of the rubber component.

The vulcanization-accelerating assistant agent that is used in the present invention includes metal oxides such as zinc oxide; fatty acids such as stearic acid, oleic acid, cotton seed fatty acid; and known vulcanization-accelerating assistant agents. The metal oxides such as the zinc oxide also serve as reinforcing agents described below.

The mixing amount of the vulcanization-accelerating assistant agent should be large enough to allow the property of the rubber component to be sufficiently displayed. The mixing amount of the vulcanization-accelerating assistant agent is set to the range of 0.5 to 30 parts by mass and favorably 1 to 30 parts by mass for 100 parts by mass of the rubber component.

The conductive material is classified into an ionic-conductive material and an electroconductive material. The ionic-conductive material or/and the electroconductive material is used.

Various ionic-conductive materials can be selected. It is possible to use those used as an antistatic agent or a charge control agent. More specifically, as the ionic-conductive materials, it is possible to list quaternary ammonium salt, metal salt of carboxylic acid, derivatives of carboxylic acid such as anhydride of carboxylic acid, esters, and the like, condensate of aromatic compound, organic metal complex, metal salt, chelate compound, monoazo metal complex, acetylacetone metal complex, metal complex of hydroxycarboxylic acid, metal complex of polycarboxylic acid, and metal complex of polyol.

As the ionic-conductive material, it is possible to list anion-containing salts having fluoro group and sulfonyl group. More specifically, it is possible to use a salt of bisfluoroalkylsulfonylimide, a salt of tris (fluoroalkylsulfonyl) methane, and a salt of fluoroalkylsulfonic acid. As cations of the above-described salts making a pair with the anions, metal ions of the alkali metals, the group 2A metals, and other metals are favorable. A lithium ion is more favorable. As the ionic-conductive material, it is possible to list $LiCF_3SO_3$, $LiC_4F_9SO_3$, $LiN(SO_2CF_3)_2$, $LiC(SO_2CF_3)_3$, and $LiCH(SO_2CF_3)_2$.

The mixing amount of the ionic-conductive material can be appropriately selected in dependence on the kind thereof. For example, it is preferable to set the mixing amount of the ionic-conductive material to 0.1 to 5 parts by mass for 100 parts by mass of the rubber component.

As the electroconductive material, conductive carbon black such as Ketjen black, furnace black, acetylene black is used.

The mixing amount of the electroconductive material should be appropriately selected in consideration of properties of the rubber component such as the electric resistance value. For example, the mixing amount thereof for 100 parts by mass of the rubber component is set to 5 to 35 parts by mass.

As the acid-accepting agent, it is possible to use various substances acting as acid acceptors. As the acid-accepting agent, hydrotalcites or magnesium oxide can be favorably used because they have preferable dispersibility. The hydrotalcites are especially favorable. It is possible to obtain a high acid-accepting effect by using the hydrotalcites in combination with a magnesium oxide or a potassium oxide. Thereby it is possible to securely prevent the other members from being contaminated.

When the rubber having the chlorine atoms is used as the rubber component (1), it is preferable that the vulcanized rubber contains an acid-accepting agent. By using the thermosetting elastomer composition containing the acid-accepting agent, it is possible to prevent chlorine gas generated in a vulcanizing operation from remaining behind and the other members from being contaminated.

The mixing amount of the acid-accepting agent for 100 parts by mass of the rubber component is favorably not less than 1 nor more than 10 parts by mass and more favorably not less than 1 nor more than 5 parts by mass. The mixing amount of the acid-accepting agent for 100 parts by mass of the rubber component is favorably not less than one part by mass to allow the acid-accepting agent to effectively display the effect of preventing a vulcanizing operation from being inhibited and the other members from being contaminated. The mixing amount of the acid-accepting agent for 100 parts by mass of the rubber component is favorably not more than 10 parts by mass to prevent the hardness of the foamed rubber roller from increasing.

As the age resistor, amines, phenols, imidazoles, and phosphorus-containing substances, and thioureas are listed.

As the amines, phenyl-α-naphthylamine, 2,2,4-trimethyl-1,2-dihydroquinoline polymer (TMDQ), 6-ethoxy-2,2,4-trimethyl-1,2-dihydroquinoline (ETMDQ), p,p'-dioctyldiphenylamine (ODPA), p,p'-dicumyldiphenylamine (DCDP), N,N'-di-2-naphthyl-p-phenylenediamine (DNPD), N,N'-diphenyl-p-phenylenediamine (DPPD), N-phenyl-N'-isopropyl-p-phenylenediamine (IPPD), and N-phenyl-N'-1,3-dimethylbutyl-p-phenylenediamine (6PPD) are listed.

The phenols that are used in the present invention includes 2,6-di-tert-butyl-4-methyl phenol (BHT or DTBMP); styrenated methyl phenol; 2,2'-methylene bis (4-methyl-6-tert-butyl phenol) (MBMBP); 2,2'-methylene bis (4-ethyl-6-tert-butyl phenol); 4,4'-thiobis (3-methyl-6-tert-butyl phenol) (TBMTBP); 4,4'-butylidene bis (3-methyl-6-tert-butyl phenol) (BBMTBP); 2, 5-di-tert-butyl hydroquinone (DBHQ); and 2,5-di-tert-amyl hydroquinone (DAHQ).

As the imidazoles, 2-mercaptobenzimidazole (MBI), zinc salts of 2-mercaptobenzimidazole (ZnMBI), and nickel dibutyldithiocarbamate (NiBDC) are listed.

As other age resistors, it is possible to use phosphorus-containing substances such as tris (nonyl phenyl) phosphite; thioureas such as 1,3-bis(diaminopropyl)-2-thiourea, tributyl thiourea, and wax for preventing ozone-caused deterioration.

The mixing amount of the age resistor should be large enough to allow the property of the rubber component to be sufficiently displayed. It is possible to combine not less than two kinds thereof. It is favorable that the mixing amount of the age resistor is set to 0.1 to 15 parts by mass for 100 parts by mass of the rubber component (1). The reason the mixing amount of the age resistor is set to 0.1 to 15 parts by mass for 100 parts by mass of the rubber component (1) is as follows: When the mixing amount of the age resistor is less than 0.1 parts by mass, the effect of the age resistor is not displayed. Thus there is a fear that the resulting thermosetting elastomer composition has an inferior mechanical property and an excessive wear. On the other hand, when the mixing amount of the age resistor exceeds 15 parts by mass, the age resistor is dispersed unfavorably owing to an excessive mixing amount thereof. Thereby there is a fear that the thermosetting elastomer composition has an inferior mechanical property. It is more favorable that the mixing amount of the age resistor is set to 0.5 to 10 parts by mass for 100 parts by mass of the rubber component (1).

As the softener for rubber, it is possible to use derivatives of phthalic acid, isophthalic acid, adipic acid, sebacic acid, benzoic acid, and phosphoric acid.

More specifically, it is possible to list dioctyl phthalate (DOP), dibutyl phthalate (DBP), di-(2-ethylhexyl) phthalate, di-iso-octyl phthalate (DIOP), higher alcohol phthalate, di-(2-ethylhexyl) sebacate, polyester adipate, dibutyl diglycol adipate, di(butoxyethoxyethyl) adipate, iso-octyl-tall oil fatty ester, tributyl phosphate (TBP), tributoxyethyl phosphate (TBEP), tricresyl phosphate (TCP), cresyl diphenyl phosphate (CDP), and diphenyl alkane.

The mixing amount of the softener for rubber should be large enough to allow the property of the rubber component to be sufficiently displayed. The mixing amount of the softener is selected in the range of 0.5 to 5 parts by mass for 100 parts by mass of the rubber component.

As the reinforcing agent, in addition to carbon black mainly used as a filler for guiding an interaction of the carbon black with the elastomer, it is possible to use inorganic reinforcing agents such as white carbon (silica filler such as dry silica or wet silica, silicate such as magnesium silicate), calcium carbonate, magnesium carbonate, magnesium silicate, clay (aluminum silicate), silane-modified clay, and talc; and organic reinforcing agents such as coumarone and indene resin, phenol resin, high styrene resin, and wood meal.

It is preferable to use the carbon black excellent in its reinforcing effect, dispersibility, and wear resistance, and low in cost. As the carbon black, it is preferable to use SAF carbon (average particle diameter: 18 to 22nm), SAF-HS carbon (average particle diameter: about 20nm), ISAF carbon (average particle diameter: 19 to 29nm), N-339 carbon (average particle diameter: about 24nm), ISAF-LS carbon (average particle diameter: 21 to 24nm), I-ISAF-HS carbon (average particle diameter: 21 to 31nm), HAF carbon (average particle diameter: about 26 to 30nm), HAF-HS carbon (average particle diameter: 22 to 30nm), N-351 carbon (average particle diameter: about 29nm), HAF-LS carbon (average particle diameter: about 25 to 29nm), LI-HAF carbon (average particle diameter: about 29nm), MAF carbon (average particle diameter: 30 to 35nm), FEF carbon (average particle diameter: about 40 to 52nm), SRF carbon (average particle diameter: 58 to 94nm), SRF-LM carbon, and GPF carbon (average particle diameter: 49 to 84nm) are listed. It is especially favorable to use the FEF carbon, the ISAF carbon, the SAF carbon or the HAF carbon.

To improve abrading performance and maintain ionic conductivity, it is effective to use furnace carbon and thermal carbon having a particle diameter not less than 80nm.

The mixing amount of the reinforcing agent for rubber should be large enough to allow the property of the rubber component to be sufficiently displayed. The mixing amount of the reinforcing agent is selected in the range of 5 to 75 parts by mass for 100 parts by mass of the rubber component.

As the above-described additives, amide compounds, metal salts of fatty acids, and wax are listed.

As the amide compounds, aliphatic amide compounds and aromatic amide compounds are listed. As the aliphatic amide compounds, amides of oleic acid, stearic acid, erucic acid, caproic acid, caprylic acid, capric acid, lauryl acid, myristic acid, palmitic acid, arachidic acid, behenic acid, palmitoleic acid, eicosane acid, erucic acid, elaidic acid, trans-11-eicosane acid, trans-13-docosane acid, linolic acid, linolenic acid, and ricinoleic acid are listed. These aliphatic amide compounds may be used singly or as a mixture of two or more kinds thereof. As the aliphatic amide compounds, it is preferable to use oleic acid amide, stearic acid amide, and erucic acid amide are especially preferable.

To form the metal salts of the fatty acids, as fatty acids, lauryl acid, stearic acid, palmitic acid, myristic acid, and oleic acid are listed. As metals, zinc, iron, calcium, aluminum, lithium, magnesium, strontium, barium, cerium, titanium, zirconium, lead, and manganese are listed.

As the wax, paraffin wax, montan wax, and amide wax are listed.

The mixing amount of these additives should be large enough to allow the property of the rubber component to be sufficiently displayed. In the present invention, the mixing amount of the additives for 100 parts by mass of the rubber component is selected in the range of 1 to 10 parts by mass.

As the crosslinking agent (3), sulfur, organic sulfur-containing compounds, organic peroxides, heat-resistant crosslinking agents, and resin crosslinking agents are used.

The sulfur is used by pulverizing recovered sulfur to use it in the form of fine powder. Surface-treated sulfur having improved dispersibility can be appropriately used. Insoluble sulfur can be also used to prevent it from blooming from unvulcanized rubber.

As the organic sulfur-containing compounds, N,N'-dithiobismorpholine, diphenyl disulfide, pentabromodisulfide, and the like are listed. It is especially favorable to use the diphenyl disulfide.

It is preferable that the mixing amount of the sulfur or that of the organic sulfur-containing compound for 100 parts by mass of the rubber component is set to 0.1 to 20 parts by mass.

As the organic peroxides, it is possible to list benzoyl peroxide, 1,1-di-(tert-butyl peroxy)-3,3,5-trimethylcyclohexane, 2,5-dimethyl-2,5-di-(benzoyl peroxy)hexane, 2,5-dimethyl-2,5-di-(benzoyl peroxy)-3-hexyne, 2,5-dimethyl-2,5-di-(tert-butyl peroxy)hexane, di-tert-butyl peroxy-di-isopropylbenzene, di-tert-butyl peroxide, di-tert-butylperoxybenzoate, dicumyl peroxide, tert-butyl cumyl peroxide, 2,5-dimethyl-2,5-di-(tert-butyl peroxy)-3-hexyne, 1,3-bis(tert-butyl peroxyisopropyl)benzene, n-butyl-4,4-bis(tert-butyl peroxy)valerate, p-chlorobenzoyl peroxide, 2,4-dichlorobenzoyl peroxide, tert-butyl peroxyisopropyl carbonate, diacetyl peroxide, lauroyl peroxide.

The mixing amount of the organic peroxide for 100 parts by mass of the rubber component is set to favorably 0.5 to 10 parts by mass and more favorably 1 to 6 parts by mass.

The heat-resistant crosslinking agent which is used in the present invention includes 1,3-bis(citraconimide methyl)benzene, hexamethylene-1,6-sodium bisthiosulfate·dihydrate, and 1,6-bis(dibenzylthiocarbamoyl disulfide)hexane.

As the resin crosslinking agent, alkylphenol resin or bromized alkylphenol formaldehyde resin such as TACKROL 201 (produced by Taoka Chemical Co.,Ltd.), TACKROL 250-III (produced by Taoka Chemical Co.,Ltd.), and Hitanol 2501 (produced by Hitachi Chemical Co.,Ltd.) are listed. It is especially preferable to use the alkylphenol resin.

The mixing amount of the resin crosslinking agent for 100 parts by mass of the rubber component is selected favorably in the range of 5 to 20 and more favorably in the range of 10 to 20 parts by mass.

The additive (4) for foaming use includes the chemical foaming agent and the chemical foaming assistant agent to be added to the rubber component as desired.

As the chemical foaming agent, azodicarbonamide (ADCA), 4,4'-oxybis(benzenesulfonylhydrazide)(OBSH), N,N'-dinitrosopentamethylenetetramine (DPT), and 5,5'-bis-1H-tetrazol (BHT) are listed. It is especially favorable to use the ADCA.

The chemical foaming assistant agent is used according to the kind of the chemical foaming agent. For example, when the ADCA is used as the chemical foaming agent, urea is used as the chemical foaming assistant agent.

The foamed rubber roller of the present invention can be produced as described below.

The thermosetting elastomer composition is obtained by mixing the above-described components with one another by using a rubber kneading apparatus such as a single-screw extruder, a 1.5-screw extruder, a twin screw extruder, an open roll, a kneader, a Banbury mixer or a heated roller. The order of mixing the components is not specifically limited, but it is possible to supply the components to the kneading apparatus all together. It is also possible to supply a part of the components to the kneading apparatus, knead them to obtain a mixture, add remaining components to the mixture, and re-perform a kneading operation. It is preferable to carry out a method of kneading the rubber component (1) and the filler (2) in advance to obtain a mixture, add the crosslinking agent (3) and the additive (4) for foaming use to the mixture, and thereafter re-performing a kneading operation.

The obtained thermosetting elastomer composition may be crosslinked before or after the kneaded material is molded or simultaneously with molding of the kneaded material to shorten a working period of time. Normally the thermosetting elastomer composition is preformed by using a known method and thereafter the preform is crosslinked. Although the crosslinking condition varies according to the composition of the thermosetting elastomer composition, the vulcanizing temperature is set to favorably 100 to 160°C and the vulcanizing period of time is set to favorably 1 to 60 minutes and more favorably 30 to 60 minutes. If an optimum vulcanizing period of time is set to less than one minute, the rubber burns in kneading and extruding steps. If an optimum vulcanizing period of time is set to more than 60 minutes, the productivity deteriorates.

After the shaft is inserted into the crosslinked molding, the molding is abraded and cut to a predetermined size to obtain the foamed rubber roller of the present invention.

The foamed rubber roller of the present invention is used as the toner supply roller for supplying a developer to the surface of a toner-carrying member of a developing mechanism of the image-forming apparatus.

The effect of the present invention is described below. Because the toner supply roller of the present invention has an excellent wear resistance, the dimension thereof and the foamed state thereof little change for a long time, even though the thermosetting elastomer composition is foamed to a high extent. Therefore it is possible to prevent the accuracy of the outer diameter of the toner supply roller from being lost owing to wear, the generation of nonuniformity of images owing to a variation of the supply amount of toner, and a decrease in print concentration owing to a decrease of the supply amount of the toner caused by wear-caused clogging of cells formed on the surface thereof.

In the toner supply roller of the present invention, the thermosetting elastomer composition is foamed to a high extent, and cells having a uniform diameter is securely formed. Thus it is possible to deliver a sufficiently large amount of toner particles in one-time delivery and prevent the generation of a defective image because there is no variation of the delivered toner amount.

BRIEF DESCRIPTION OF THE DRAWINGS

Fig. 1 is a schematic view showing an embodiment of a toner supply roller of the present invention.
Fig. 2 is a schematic view showing another embodiment of the toner supply roller of the present invention.
Fig. 3 shows a method of measuring an electric resistance of the toner supply roller.

DETAILED DESCRIPTION OF THE PREFERRED EMBODIMENTS

The embodiments of the present invention are described below with reference to the drawings.

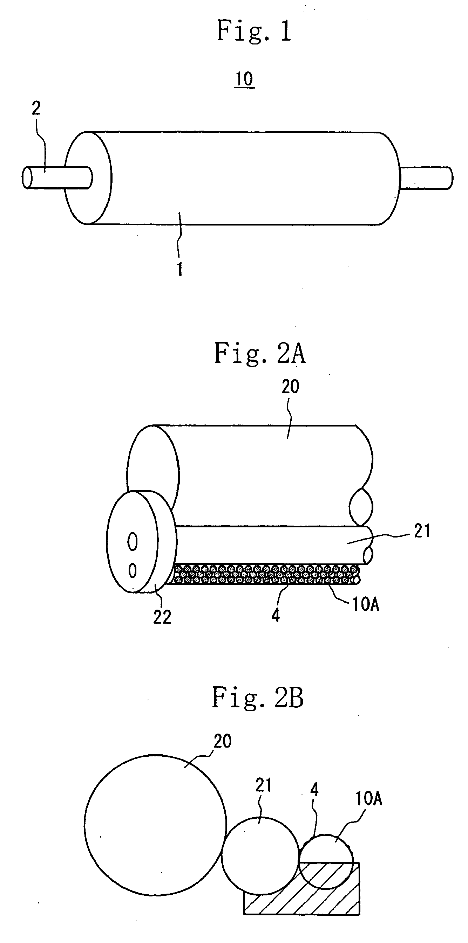

As shown in Fig. 1, a toner supply roller 10 of the present invention has a shaft 2 and a foamed elastic layer 1 formed on the peripheral surface thereof.

The foamed elastic layer 1 is cylindrically formed. The thickness of the foamed elastic layer 1 is set to 2mm to 10mm and favorably 3 to 6mm. If the thickness of the foamed elastic layer 1 is less than 2mm, it is difficult to obtain an appropriate nip. If the thickness of the foamed elastic layer 1 is more than 10mm, the foamed elastic layer 1 is so large that it is difficult to produce a small and lightweight foamed rubber roller 10.

The shaft 2 is made of metal such as aluminum, aluminum alloy, SUS or iron or ceramics.

The foamed elastic layer 1 and the shaft 2 may be bonded to each other with a conductive adhesive agent. Alternatively without using the conductive adhesive agent, the columnar shaft 2 may be inserted into a hollow portion of the foamed elastic layer 1 by press fit.

As shown in Fig. 2, the toner supply roller 10 of the present invention is used as a toner supply roller 10A for supplying toner 4 to a developing roller 21 disposed along a photoreceptor drum 20. Reference numeral 22 in Fig. 2 denotes a sealing member for preventing the leak of the toner 4.

As shown in Figs. 1 and 2, only the foamed elastic layer 1 is formed on the peripheral surface of the shaft 2. But a plurality of layers may be formed thereon with the foamed elastic layer 1 disposed at the outermost layer. The inner layers other than the foamed elastic layer 1 may be provided with various functions and compositions so long as the functions and compositions are not contradictory to the object of the present invention.

A thermosetting elastomer composition composing the foamed elastic layer 1 is described below.

In the first embodiment, the thermosetting elastomer composition is composed of the following components.

As a rubber component (1), NBR or HNBR is used.

It is preferable to use moderate high-nitrile NBR having the bound acrylonitrile amount of 31% to 36% as the NBR.

It is preferable to use the HNBR, formed by hydrogenating the moderate high-nitrile NBR, which has residual double bonds of not more than 10%. The HNBR having the bound acrylonitrile amount of 21% to 44% and the Mooney viscosity ML1+4(100°C) in the range of 40 to 150 is more favorable.

As the filler (2), a conductive material is used in addition to zinc methacrylate (2a) or the mixture (2a) of methacrylic acid and zinc oxide.

The mixing amount of the zinc methacrylate for 100 parts by mass of the rubber component (1) is set to five to 60 parts by mass, favorably 10 to 40 parts by mass, and more favorably 15 to 30 parts by mass.

The mixing amount of the mixture of the methacrylic acid and the zinc oxide for 100 parts by mass of the rubber component (1) is 5 to 60 parts by mass, favorably 10 to 40 parts by mass, and more favorably 15 to 30 parts by mass. The mixing ratio(mass) between the methacrylic acid and the zinc oxide is set to 1 to 2:1 and favorably 1:1.

As the conductive material, an electroconductive material consisting of conductive carbon black is used. It is especially preferable to use acetylene black. The mixing amount of the conductive material for 100 parts by mass of the rubber component is set to 10 to 20 parts by mass.

As a crosslinking agent (3), a sulfur-containing compound or/and an organic peroxide are used. The sulfur-containing compound and the organic peroxide may be used singly or as a mixture of two or more kinds thereof.

It is favorable to use diphenyl disulfide as the sulfur-containing compound. The mixing amount of the sulfur-containing compound for 100 parts by mass of the rubber component (1) is set to favorably 0.1 to 5 parts by mass.

It is favorable to use dicumyl peroxide as the organic peroxide. The mixing amount of the organic peroxide for 100 parts by mass of the rubber component (1) is set to 0.5 to 10 parts by mass and favorably 1 to 6 parts by mass.

As an additive (4) for foaming use, 4 to 10 parts by mass of azodicarbonamide serving as a chemical foaming agent is used for 100 parts by mass of the rubber component (1). As a chemical foaming assistant agent, 0.5 to 5 parts by mass of urea is used for 100 parts by mass of the rubber component (1).

A thermosetting elastomer composition of the second embodiment is composed of the following components.

As the rubber component (1), NBR or HNBR is used. The HNBR is used in combination with the ionic-conductive rubber.

The NBR and the HNBR used in the second embodiment are similar to those used in the first embodiment.

As the ionic-conductive rubber, a polyether copolymer consisting of an ethylene oxide (EO)-propylene oxide (PO)-allyl glycidyl ether (AGE) terpolymer is used. A preferable content ratio among the ethylene oxide (EO), the propylene oxide (PO), and the allyl glycidyl ether (AGE) of the terpolymer is EO:PO:AGE = 80 to 95 mol%:1 to 10 mol%:1 to 10 mol%. The number-average molecular weight Mn of the terpolymer is favorably not less than 10,000, more favorably not less than 30,000, and most favorably not less than 50,000.

As the filler (2), a reinforcing agent is used in addition to the zinc methacrylate (2a) or the mixture (2a) of the methacrylic acid and the zinc oxide.

The zinc methacrylate (2a) or the mixture (2a) of the methacrylic acid and the zinc oxide used in the second embodiment are similar to those used in the first embodiment.

It is preferable to use calcium carbonate as the reinforcing agent. The mixing amount of the reinforcing agent for 100 parts by mass of the rubber component is set to favorably 10 to 60 parts by mass and more favorably 10 to 30 parts by mass.

The crosslinking agent (3) and the additive (4) for foaming use used in the second embodiment are similar to those used in the first embodiment.

A thermosetting elastomer composition of the third embodiment is composed of the following components.

As the rubber component (1), rubber consisting of the HNBR, serving as the base polymer, in which the zinc methacrylate is finely dispersed is used. It is preferable to use other rubber in combination with the rubber consisting of the HNBR in which the zinc methacrylate is finely dispersed. As the other rubber, NBR or/and the HNBR are preferable.

The mixing amount of the zinc methacrylate for 100 parts by mass of the rubber component (1) is set to 5 to 60 parts by mass, favorably 10 to 40 parts by mass, and more favorably 15 to 30 parts by mass.

More specifically the mixing amount of the zinc methacrylate to be dispersed in the HNBR serving as the base polymer is set to 91 to 110 parts by mass for 100 parts by mass of the HNBR. It is preferable that the HNBR serving as the base polymer has the bound acrylonitrile amount of 21% to 44% and the Mooney viscosity ML1+4(100°C) in the range of 40 to 150.

The mixing ratio between the rubber consisting of the HNBR in which the zinc methacrylate is finely dispersed and the other rubber to be mixed therewith is so adjusted that the mixing amount of the rubber consisting of the HNBR in which the zinc methacrylate is finely dispersed is 9.5 to 126 parts by mass and favorably 10 to 120 parts by mass for 100 parts by mass of the entire rubber component (1).

As the filler (2), the conductive material used in the third embodiment is similar to that used in the second embodiment.

The crosslinking agent (3) and the additive (4) for foaming use used in the third embodiment are similar to those used in the first embodiment.

The foamed rubber roller 10 having the foamed elastic layer 1 composed of the thermosetting elastomer composition having any one of the mode of the first, second, and third embodiments is produced as described below:

Initially the rubber component (1) and the filler (2) are kneaded at 80 to 120°C for five to six minutes with a kneading apparatus such as a single-screw extruder, a 1.5-screw extruder, a twin screw extruder, an open roll, a kneader, a Banbury mixer, and a heated roller. If the kneading temperature is less than 80°C and the kneading period of time is less than five minutes, the rubber component (1) is insufficiently plasticized, and the mixture is insufficiently kneaded. If the kneading temperature is more than 120°C and the kneading period of time is more than six minutes, there is a fear that the rubber component (1) is decomposed.

After the crosslinking agent (3) and the additive (4) for foaming use are added to the obtained mixture, they are kneaded at 80 to 90°C for five to six minutes by using the above-described kneading apparatus. If the kneading temperature is less than 80°C and the kneading period of time is less than five minutes, the mixture is insufficiently plasticized and kneaded. If the kneading temperature is more than 90°C and the kneading period of time is more than six minutes, there is a fear that the crosslinking agent (3) is decomposed.

The thermosetting elastomer composition obtained by carrying out the above-described method is preformed by using a known method. The molding method is not specifically limited but a known method such as injection molding or compression molding can be used.

Thereafter the obtained preform is vulcanized. As the vulcanizing conditions, it is preferable to set the vulcanizing temperature to 160°C and a vulcanizing period of time to 30 to 60 minutes.

After the shaft is inserted into the vulcanized molding, the molding is abraded and cut to a predetermined size to obtain the foamed rubber roller 10 of the present invention.

The foamed rubber roller of the first, second, and third embodiment produced in the manner has an electric resistance of $10^3$ to $10^{10}$ $\Omega$ and favorably $10^5$ to $10^7$ $\Omega$.

The foaming magnification of the foamed elastic layer 1 is set to favorably not less than 8 nor more than 15. The cell-diameter distribution of the foamed elastic layer 1 is set to favorably not less than 150$\mu$m nor more than 500$\mu$m and more favorably not less than 200$\mu$m nor more than 400$\mu$m.

• Examples 1 through 10 and Comparison Examples 1 through 4

After the mixing amount (unit: part by mass) of the rubber component (1) and that of the filler (2) were measured as shown in tables 1 and 2, they were supplied to a rubber kneading apparatus and kneaded at 80 to 120°C for five to six minutes. The mixing amount of the zinc methacrylate shown in parentheses of table 2 indicates the content of the zinc methacrylate dispersed in the HNBR serving as the rubber component.

The obtained mixture and the crosslinking agent (3) and the additive (4) for foaming use were supplied to the rubber kneading apparatus and kneaded at 80 to 90°C for five to six minutes. The mixing amount (unit: part by mass) of the crosslinking agent (3) and the additive (4) for foaming use are as shown in tables 1 and 2.

The obtained thermosetting elastomer composition was tubularly preformed by using a single screw extruder.

After the tubular preform was mounted on a shaft for vulcanizing use, it was vulcanized for one hour at 160°C by using a vulcanizer. Thereafter the tubular preform was mounted on a shaft ($\phi$6mm) to which a conductive adhesive agent was applied. The tube and the shaft were bonded to each other in an oven at 160°C. After the ends of the tube were cut, traverse abrasion was carried out with a cylindrical abrading machine. Thereafter the surface of the tube was abraded to a mirror-like surface finish. As a result, a foamed rubber roller of each example and comparison example was obtained. The foamed rubber roller had $\phi$6mm in the diameter of the shaft, $\phi$12mm in the outer diameter thereof, and 220mm in the length of the rubber.

Table 1

| | | CE1 | E1 | E2 | E3 | E4 | E5 | CE2 |
|---|---|---|---|---|---|---|---|---|
| Rubber component (1) | Polyether copolymer | | | | 60 | | | |
| | NBR | | | | | | | |
| | HNBR | 100 | 100 | 100 | 40 | 100 | 100 | 100 |
| | ZDMA-containing HNBR | | | | | | | |
| Filler (2) | Zinc methacrylate | | | | | | 30 | |
| | Methacrylic acid | 2 | 2.5 | 10 | 10 | 30 | | 35 |
| | Zinc oxide | 2 | 2.5 | 10 | | 30 | | 35 |
| | Carbon black | 17 | 17 | 17 | | 17 | 17 | 17 |
| | Calcium carbonate | | | | 30 | | | |
| Crosslinking agent (3) | Sulfur compound | 0.5 | 0.5 | 0.5 | 0.5 | 0.5 | 0.5 | 0.5 |
| | Organic peroxide | 3 | 3 | 3 | 3 | 3 | 3 | 3 |
| Additive (4) for foaming use | Chemical foaming agent | 10 | 10 | 10 | 10 | 10 | 10 | 10 |
| | Chemical foaming assistant agent | 1 | 1 | 1 | 1 | 1 | 1 | 1 |
| Conductivity | | Electronic | Electronic | Electronic | Ionic | Electronic | Electronic | Electronic |
| Properties | Electric resistance (log $\Omega$) | 6.4 | 6.4 | 6.5 | 6.1 | 6.5 | 6.5 | 6.5 |
| | Contamination of photoreceptor | ○ | ○ | ○ | ○ | ○ | ○ | ○ |
| | Foaming magnification (times) | 14 | 13 | 11 | 9 | 8 | 12 | 6 |
| | Cell diameter ($\mu$m) | 500 | 400 | 300 | 250 | 200 | 300 | 150 |

(continued)

| Evaluation | | CE1 | E1 | E2 | E3 | E4 | E5 | CE2 |
|---|---|---|---|---|---|---|---|---|
| Evaluation | Evaluation of initial image | ○ | ○ | ○ | ○ | ○ | ○ | Δ |
| | Evaluation of image on 5000th sheet | Δ~× | ○ | ○ | ○ | ○ | ○ | Δ |
| | Durability | Δ | Δ | ○ | ○~Δ | Δ | ○ | Δ |
| | Judgement | Δ | ○ | ◎ | ○ | ○ | ◎ | Δ |
| E and CE in the uppermost column indicate example and comparison example respectively. | | | | | | | | |

Table 2

| | | CE3 | E6 | E7 | E8 | E9 | E10 | CE4 |
|---|---|---|---|---|---|---|---|---|
| Rubber component (1) | Polyether copolymer | | | | | | | |
| | NBR | | | | | 50 | | |
| | HNBR | 96 | 95 | 85 | 70 | 20 | 40 | 35 |
| | ZDMA-containing HNBR | 8 | 10 | 30 | 60 | 60 | 120 | 135 |
| Filler (2) | Zinc methacrylate | (4) | (5) | (15) | (30) | (30) | (60) | (65) |
| | Methacrylic acid | | | | | | | |
| | Zinc oxide | | | | | | | |
| | Carbon black | 17 | 17 | 17 | 17 | 17 | 17 | 17 |
| | Calcium carbonate | | | | | | | |
| Crosslink ing agent (3) | Sulfur compound | 0.5 | 0.5 | 0.5 | 0.5 | 0.5 | 0.5 | 0.5 |
| | Organic peroxide | 3 | 3 | 3 | 3 | 3 | 3 | 3 |
| Additive (4) for foaming use | Chemical foaming agent | 10 | 10 | 10 | 10 | 10 | 10 | 10 |
| | Chemical foaming assistant agent | 1 | 1 | 1 | 1 | 1 | 1 | 1 |
| Conductivity | | Electronic | Electronic | Electronic | Electronic | Electronic | Electronic | Electronic |
| Properties | Electric resistance (log $\Omega$) | 6.4 | 6.5 | 6.4 | 6.5 | 6.2 | 6.4 | 6.5 |
| | Contamination of photoreceptor | ○ | ○ | ○ | ○ | ○ | ○ | ○ |
| | Foaming magnification (times) | 14 | 13 | 12 | 11 | 15 | 8 | 7 |
| | Cell diameter ($\mu$m) | 400 | 350 | 300 | 300 | 400 | 200 | 150 |
| Evaluation | Evaluation of initial image | ○ | ○ | ○ | ○ | ○ | ○ | Δ |
| | Evaluation of image on 5000th sheet | Δ | ○ | ○ | ○ | ○ | ○ | Δ |
| | Durability | Δ | Δ | ○ | ○ | ○ | Δ | Δ |
| | Judgement | Δ | ○ | ◎ | ◎ | ◎ | ○ | Δ |
| E and CE in the uppermost column indicate example and comparison example respectively. | | | | | | | | |

EP 1 921 511 B1

The following products were used as the components shown in tables 1 and 2:

(a) Rubber component (1)

• Polyether copolymer: "Zeospan ZSN8030 (commercial name)" produced by Zeon Corporation

```
EO(ethylene oxide)/ PO (propylene oxide)/AGE (allyl

glycidyl ether) = 90 mol%/4 mol%/6 mol%
```

• NBR: "N232(commercial name)" produced by JSR Corporation (bound acrylonitrile amount: 35%)
• HNBR: "Zetpol 2010H(commercial name)" produced by Zeon Corporation (bound acrylonitrile amount: 36%, Mooney viscosity: 145).
• ZDMA-containing HNBR: "Zeoforte ZSC 2195H(commercial name)" produced by Zeon Corporation. (100 parts by mass of zinc methacrylate (ZDMA) was finely dispersed in 100 parts by mass of HNBR "Zetpol 2010H (commercial name)" serving as base polymer

(b) Filler (2)

• Zinc methacrylate: "Sun-ester SK-30(commercial name)" produced by Sanshin Chemical Industry Co., Ltd.
• Methacrylic acid: "MAA(commercial name)" produced by Mitsubishi Rayon Co., Ltd.
• Zinc oxide: "Two kinds of zinc oxide(commercial name)" produced by Mitsui Mining and Smelting Co., Ltd.
• Carbon black: "Denka Black(commercial name)" produced by Denki Kagaku Kogyo kabushiki kaisha.
• Calcium carbonate: "Hakuenka CC(commercial name)" produced by Shiraishi Calcium Kaisha, Ltd.

(c) Crosslinking agent (3)

• Sulfur compound: diphenyl disulfide ("DPDS(commercial name)" produced by Sumitomo Seika Chemical Co., Ltd.
• Organic peroxide: dicumyl peroxide ("Percumyl D(commercial name)" produced by NOF CORPORATION)

(d) Additive (4) for foaming use

• Chemical foaming agent: azodicarbonamide ("VINYFOR AC#R(commercial name)" produced by Eiwa Chemical Ind. Co., Ltd.)
• Chemical foaming assistant agent: Urea ("CELLPASTE 101(commercial name)" produced by Eiwa Chemical Ind. Co., Ltd.)

The obtained foamed rubber roller of each of the examples and the comparison examples was measured in the properties thereof and evaluated in the functions thereof.

• Electric Resistance of Roller

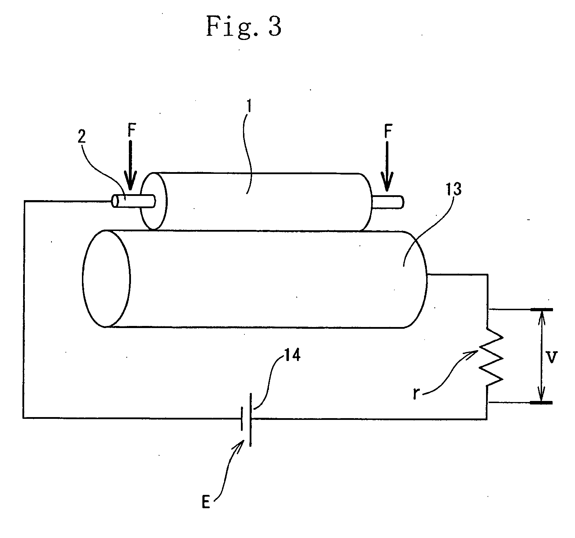

As shown in Fig. 3, at a temperature of 23°C and a relative humidity of 55%, the foamed elastic layer 1 of the foamed rubber roller 10 was mounted on an aluminum drum 13($\phi$ 30), with the foamed elastic layer 1 in contact with the aluminum drum 13. A leading end of a conductor, having an internal electric resistance of r (100$\Omega$ to 10k$\Omega$), which was connected to a positive side of a power source 14 was connected to one end surface of the aluminum drum 13. A leading end of a conductor connected to a negative side of the power source 14 was connected to one end surface of the shaft 2. A load of 500g was applied to both ends of the shaft 2. A voltage of 200V was applied between the shaft 2 and the aluminum drum 13, while the aluminum drum 13 was rotated to indirectly rotate the foamed rubber roller 10. The electric resistance was circumferentially measured at 36 times. The average value of 36 values was found. In conformity to the level of the electric resistance, the internal electric resistance value was so adjusted that significant figures of measured values were made as large as possible.
Supposing that a voltage applied to the apparatus is E, the electric resistance R of the roller is expressed as: $R = r \times E/(V-r)$. Because the term of -r is regarded as being extremely small, $R = r \times E/V$. The electric resistance R of each roller was computed from the detected voltage V applied to the internal electric resistance r. In tables 1 and 2, each electric resistance value is shown by the common logarithm of the found average value.

• Contamination of photoreceptor

The foamed elastic layer 1 of the foamed rubber roller 10 was mounted on a photoreceptor. Thereafter the foamed elastic layer 1 was pressed against the photoreceptor with a load of 500g applied to both ends of the shaft 2. The photoreceptor was left for five days at a temperature of 40°C and a relative humidity of 90% to visually check the degree of contamination on the surface of the photoreceptor.

• Foaming magnification

The bulk specific gravity was determined from the volume of the foamed elastic layer of the foamed rubber roller and its mass. The specific gravity of the thermosetting elastomer composition before it was vulcanized and foamed was measured in advance. The bulk specific gravity was divided by the specific gravity of the thermosetting elastomer composition to find the foaming magnification.

• Cell diameter

Photographs of foamed cells were taken at a magnification of 100 on the circular surface of each foamed rubber roller at two points spaced by 15mm from both ends thereof, at the center point in its longitudinal direction, and at a point disposed radially inward by 5mm from each of these three points. Thus the foamed cells were photographed at six points (3X2). Images of the photographs were binarized by an image-processing software. Thereafter computations were performed to find an average diameter ($\mu$m) in all the photographs, and the average of the obtained values was computed. The results are shown in tables 1 and 2.

Evaluation of formed image

The foamed rubber roller of each of the examples and the comparison examples was mounted on a commercially available laser printer ("LBP2260(commercial name)" produced by Canon Inc.) as a toner supply roller.

At a temperature of 23°C and a relative humidity of 55%, 5% image was printed on 5,000 sheets. An initial image formed on the tenth sheet and an image formed on the 5,000th sheet were visually checked and evaluated.

Toner supply rollers which contributed to the formation of a favorable image were marked by $\bigcirc$. Toner supply rollers which caused the generation of nonuniformity in images to some extent were marked by $\Delta$. Toner supply rollers which caused the generation of nonuniformity in images to a high extent were marked by $\times$.

• Durability

After formed images were evaluated, each foamed rubber roller was taken out of the printer to visually observe a change of the surface of the foamed elastic layer at a magnification of 100 by using an amplifier.

Toner supply rollers whose surfaces hardly changed were marked by $\bigcirc$. Toner supply rollers which had toner clogging and wear on the foamed elastic layer thereof to some extent were marked by $\Delta$. Toner supply rollers which had toner clogging and wear on the foamed elastic layer thereof to a high extent were marked by $\times$.

• Judgement

Each of the foamed rubber rollers was generically evaluated based on the measurement and the test results.

Foamed rubber rollers judged that they would have a high durability, would provide excellent images for a long time, and would little change in the outlook were marked by $\circledcirc$. Foamed rubber rollers judged that they would change a little in the outlook thereof but would provide good images for a long time were marked by $\bigcirc$. Foamed rubber rollers judged that they were inferior in the durability and would form inferior images but could be practically used were marked by $\Delta$. Foamed rubber rollers judged that they were inferior in the durability and could not be practically used were marked by $\times$.

The foamed rubber roller of each of the comparison examples 1 through 4 was not durable and caused nonuniformity in the image formed on the 5000th sheet. Thus it was found that it was difficult for the foamed rubber rollers to keep the quality thereof for a long time.

On the other hand, the foamed rubber roller of each of the examples 1 through 10 changed a little in the outlook thereof, but did not cause nonuniformity in the image formed on the 5000th sheet. Thus it was found that these foamed rubber rollers keep the quality thereof for a long time. Those which contained the conductive material did not contaminate the photoreceptor because the conductive material did not bleed.

**Claims**

1. A toner supply roller of an image-forming apparatus comprising a foamed elastic layer forming an outer layer thereof; wherein said foamed elastic layer is composed of a thermosetting elastomer composition containing 100 parts by mass of a rubber component (1) and 5 to 60 parts by mass of zinc methacrylate (2a) or 5 to 60 parts by mass of a mixture (2a) of methacrylic acid and zinc oxide as a filler (2); said thermosetting elastomer composition being foamed with a combination of a chemical foaming agent and a chemical foaming assistant agent, wherein said rubber component (1) contains acrylonitrile-butadiene rubber or/and hydrogenated acrylonitrile-butadiene rubber, wherein said rubber component (1) further comprises as an ionic-conductive rubber a polyether copolymer consisting of an ethylene oxide (EO)-propylene oxide (PO)-allyl glycidyl ether (AGE) terpolymer or said filler (2) further comprises as a conductive material an electroconductive material consisting of conductive carbon black; and said toner supply roller of an image-forming apparatus has an electric resistance of $10^3$ to $10^{10}$ $\Omega$, and wherein the foaming magnification of said foamed elastic layer is set to not less than seven nor more than 20 and the cell-diameter distribution thereof is set to not less than 100 $\mu$m nor more than 700 $\mu$m, wherein said electric resistance of said toner supply roller of an image-forming apparatus is measured as described in the description in the section "•Electric Resistance of Roller", wherein said foaming magnification of said foamed elastic layer is measured by determining the bulk specific gravity from the volume of the foamed elastic layer of said toner supply roller of an image-forming apparatus and its mass, by measuring the specific gravity of the thermosetting elastomer composition before it is vulcanized and foamed and by dividing the bulk specific gravity by the specific gravity of said thermosetting elastomer composition, and wherein said cell-diameter distribution of said foamed elastic layer is measured by taking photographs of foamed cells at a magnification of 100 on the circular surface of each toner supply roller at two points spaced by 15 mm from both ends thereof, at the center point in its longitudinal direction, and at a point disposed radially inward by 5 mm from each of these three points, by photographing the foamed cells at six points (3X2), by binarizing images of the photographs by an image-processing software, by performing computations in all the photographs and by computing the average of the obtained values.

2. The foamed rubber roller according to claim 1, wherein said zinc methacrylate is contained in said thermosetting elastomer composition by adding a rubber component (1a) in which said zinc methacrylate is dispersed to hydrogenated acrylonitrile-butadiene rubber.

**Patentansprüche**

1. Tonerversorgungswalze einer Bildgebungsvorrichtung, die eine geschäumte elastische Schicht umfasst, die eine Außenschicht davon bildet; wobei die geschäumte elastische Schicht aus einer warm härtenden Elastomerzusammensetzung gebildet ist, die 100 Gewichtsteile einer Kautschukkomponente (1) und 5 bis 60 Gewichtsteile Zinkmethacrylat (2a) oder 5 bis 60 Gewichtsteile einer Mischung (2a) aus Methacrylsäure und Zinkoxid als einen Füllstoff (2) enthält; wobei die warm härtende Elastomerzusammmensetzung mit einer Kombination aus einem chemischen Treibmittel und einem chemischen Treibhilfsmittel geschäumt ist, wobei die Kautschukkomponente (1) Acrylnitril-Butadien-Kautschuk und/oder hydrierten Acrylnitril-Butadien-Kautschuk enthält, wobei die Kautschukkomponente (1) ferner als einen ionenleitenden Kautschuk ein Polyethercopolymer umfasst, das aus einem Ethylenoxid-(EO-)Propylenoxid-(PO-)Allylglycidylether-(AGE-)Terpolymer besteht, oder der Füllstoff (2) ferner als ein leitfähiges Material ein elektrisch leitfähiges Material umfasst, das aus leitfähigem Ruß besteht; und die Tonerversorgungswalze einer Bildgebungsvorrichtung einen elektrischen Widerstand von $10^3$ bis $10^{10}$ $\Omega$ aufweist, und wobei die Schäumungsvergrößerung der geschäumten elastischen Schicht auf nicht weniger als sieben und nicht mehr als 20 eingestellt ist, und die Zellen-Durchmesserverteilung davon auf nicht weniger als 100 $\mu$m und nicht mehr als 700 $\mu$m eingestellt ist, wobei der elektrische Widerstand der Tonerversorgungswalze einer Bildgebungsvorrichtung wie in der Beschreibung in dem Abschnitt "• Electric Resistance of Roller" beschrieben gemessen wird, wobei die Schäumungsvergrößerung der geschäumten elastischen Schicht gemessen wird, indem die relative Grundstoffdichte aus dem Volumen der geschäumten elastischen Schicht der Tonerversorgungswalze einer Bildgebungsvorrichtung und ihrer Masse ermittelt wird, indem die relative Dichte der warm härtenden Elastomerzusammensetzung gemessen wird, bevor sie vulkanisiert und geschäumt wird, und indem die relative Grundstoffdichte durch die relative Dichte der warm härtenden Elastomerzusammensetzung dividiert wird, und

wobei die Zellen-Durchmesserverteilung der geschäumten elastischen Schicht gemessen wird, indem Fotos von geschäumten Zellen mit einer Vergrößerung von 100 auf der kreisförmigen Oberfläche jeder Tonerversorgungswalze an zwei Punkten, die 15 mm von beiden Enden davon beabstandet sind, an dem Mittelpunkt in ihrer Längsrichtung und an einem Punkt, der 5 mm radial innen von jedem dieser drei Punkte angeordnet ist, aufgenommen werden, indem die geschäumten Zellen an sechs Punkten (3X2) fotografiert werden, indem Bilder der Fotografien durch eine Bildverarbeitungssoftware binarisiert werden, indem Berechnungen in allen Fotografien durchgeführt werden und indem der Mittelwert der erhaltenen Werte berechnet wird.

**2.** Geschäumte Kautschukwalze nach Anspruch 1,
wobei das Zinkmethacrylat in der warm härtenden Elastomerzusammensetzung enthalten ist, indem eine Kautschukkomponente (1a), in der das Zinkmethacrylat verteilt ist, dem hydrierten Acrylnitril-Butadien-Kautschuk hinzugefügt ist.

## Revendications

**1.** Rouleau d'alimentation en toner d'un appareil de formation d'une image comprenant une couche élastique expansée formant une couche externe de celui-ci ;
dans lequel ladite couche élastique expansée est constituée d'une composition élastomère thermodurcissable contenant 100 parties en masse d'un constituant de caoutchouc (1) et de 5 à 60 parties en masse de méthacrylate de zinc (2a) ou de 5 à 60 parties en masse d'un mélange (2a) d'acide méthacrylique et d'oxyde de zinc comme une charge (2) ; ladite composition élastomère thermodurcissable étant expansée avec une combinaison d'un agent d'expansion chimique et d'un agent assistant d'expansion chimique,
dans lequel ledit constituant de caoutchouc (1) contient un caoutchouc d'acrylonitrile-butadiène et/ou un caoutchouc d'acrylonitrile-butadiène hydrogéné,
dans lequel ledit constituant de caoutchouc (1) comprend de plus comme caoutchouc ionique-conducteur un copolymère de polyéther constitué d'un terpolymère d'oxyde d'éthylène (EO)-oxyde de propylène (PO)-allylglycidyléther (AGE) ou ladite charge (2) comprend de plus comme matériau conducteur un matériau électroconducteur constitué de noir de carbone conducteur ; et ledit rouleau d'alimentation en toner d'un appareil de formation d'image présente une résistance électrique de $10^3$ à $10^{10}$ $\Omega$, et
dans lequel l'agrandissement d'expansion de ladite couche élastique expansée est fixé pour ne pas être inférieur à sept ni supérieur à 20 et la distribution de diamètre d'alvéole de celle-ci est fixée pour ne pas être inférieure à 100 $\mu$m ni supérieure à 700 $\mu$m,
dans lequel ladite résistance électrique dudit rouleau d'alimentation en toner d'un appareil de formation d'image est mesurée comme décrit dans la description dans la section "•résistance électrique de rouleau",
dans lequel ledit agrandissement d'expansion de ladite couche élastique expansée est mesuré en déterminant la densité apparente à partir du volume de la couche élastique expansée dudit rouleau d'alimentation en toner d'un appareil formant une image et de sa masse, en mesurant la densité de la composition élastomère thermodurcissable avant qu'elle soit vulcanisée et expansée et en divisant la densité apparente par la densité de ladite composition élastomère thermodurcissable, et
dans lequel ladite distribution de diamètre d'alvéole de ladite couche élastique expansée est mesurée en prenant des photographies d'alvéoles expansées à un agrandissement de 100 sur la surface circulaire de chaque rouleau d'alimentation en toner en deux points espacés de 15 mm à partir des deux extrémités de celui-ci, au point central dans sa direction longitudinale, et en un point disposé radialement vers l'intérieur de 5 mm à partir de chacun de ces trois points, en photographiant les alvéoles expansées en six points (3X2) par binarisation d'images des photographies par un logiciel de traitement d'image, en réalisant des calculs dans toutes les photographies et en calculant la moyenne des valeurs obtenues.

**2.** Rouleau en caoutchouc expansé selon la revendication 1, dans lequel ledit méthacrylate de zinc est contenu dans ladite composition élastomère thermodurcissable en ajoutant un constituant de caoutchouc (1a) dans lequel ledit méthacrylate de zinc est dispersé par rapport au caoutchouc d'acrylonitrile-butadiène hydrogéné.

# Fig. 1

10

# Fig. 2A

20

# Fig. 2B

20

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004045656 A

- EP 1172402 A1